# EUROPÄISCHE PATENTSCHRIFT

(11) **EP 1 444 174 B1**
(45) Veröffentlichungstag und Bekanntmachung des Hinweises auf die Patenterteilung: **18.01.2006**
(21) Anmeldenummer: 02787633.3
(22) Anmeldetag: 11.11.2002
(51) Int. Cl.: C04B 41/87, D01F 11/00, B05D 3/04, B05D 1/18, B01D 69/08, B01D 67/00

(54) **VERFAHREN ZUR ERZEUGUNG VON EINER BESCHICHTUNG AUF EINER HOHLFASER**
METHOD FOR GENERATION OF A COATING ON A HOLLOW FIBRE
PROCEDE DE PRODUCTION D'UN REVETEMENT SUR UNE FIBRE CREUSE

(30) Priorität: 14.11.2001 DE 10155901
(43) Veröffentlichungstag der Anmeldung: 11.08.2004
(73) Patentinhaber: Mann + Hummel GmbH, 71638 Ludwigsburg (DE)
(72) Erfinder: TUDYKA, Stefan, 71642 Ludwigsburg (DE); MICKE, Michael, 71334 Waiblingen (DE); URBAHN, Arndt, 71642 Ludwigsburg (DE); GERLACH, Karin, 71696 Möglingen (DE)
(74) Vertreter: Voth, Gerhard
(86) Internationale Anmeldenummer: PCT/EP2002/012563
(87) Internationale Veröffentlichungsnummer: WO 2003/042127

(56) Entgegenhaltungen:
- EP-A- 0 311 258
- EP-A- 0 393 788
- US-A- 2 946 698
- US-A- 5 686 144
- US-A- 5 782 959

## Beschreibung

### Stand der Tchnik

Die Erfindung betrifft ein Verfahren zur Erzeugung einer Beschichtung auf der Außenseite einer Hohlfaser durch Eintauchen in ein den Beschichtungswerkstoff enthaltendes Bad nach dem Oberbegriff des Patentanspruches 1.

Ein Verfahren, keramische Hohlfasern mittels Phaseninversion herzustellen, ist beispielsweise aus DE 199 10 012 C1 bekannt. Die in diesem Dokument offenbarten Hohlfasern werden mittels einer Ringspaltdüse ersponnen und ausgehend von der Düse in ein Fällbad eingeleitet. Dort wird das Extrudat ausgefällt, wodurch der Hohlfaden, der in diesem Verfahrensstadium noch biegeschlaff ist, stabilisiert wird.

Die Hohlfaser kann z. B. aus einem Polymer bestehen, das aus der Gruppe der Polysacharide, Polysacharidderivate oder Polyvinylalkohole ausgewählt werden kann. Weiterhin ist ein beliebiger Zusatzstoff hinzugegeben, der insbesondere keramisch sein kann. Als Lösungsmittel für das Polymer wird z.B. Amin-N-Oxyd verwendet, mit dessen Hilfe gleichzeitig die Suspension mit dem Zusatzstoff hergestellt wird.

Gemäß dem aufgeführten Dokument lässt sich mit dem beschriebenen Verfahren eine Hohlfaser herstellen, deren Außendurchmesser ca. 1 mm beträgt und die extrem dünne Wandstärken aufweist.

Weiterhin sind Verfahren zur Beschichtung von porösen keramischen Hohlkörpern aus der JP 570 17 850 bekannt. Entsprechend der Lehre dieses Dokumentes werden diese Hohlkörper in ein Bad getaucht, welches den Beschichtungswerkstoff enthält. Dieses kann sich dann auf Grund physikalischer bzw. chemischer Prozesse am porösen Hohlkörper absetzen. Ein besonderer physikalischer Prozess, der hierbei genutzt werden kann, ist die Kapillarwirkung der durch die porösen Wandungen des Hohlkörpers gebildeten Kanäle. Die Lösung mit dem Beschichtungswerkstoff dringt in diese Kanäle ein, wobei der Beschichtungswerkstoff auf dem Trägerbauteil abgeschieden wird. Allerdings müssen für diesen Vorgang die Kapillarwirkungen in der Wandung des Hohlkörpers genügend groß sein, was nur durch große Wandstärken des Hohlkörpers gewährleistet sein kann. Bei Wandstärken, wie sie bei der oben beschriebenen Hohlfaser auftreten, reichen die Kapillarkräfte jedoch nicht aus, um befriedigende Beschichtungsergebnisse in einer angemessenen Produktionszeit zu erzeugen. Vielmehr müssten die Hohlfasern über längere Zeiträume im Beschichtungsbad belassen werden, wodurch die Wirtschaftlichkeit des fertigen Produktes stark leiden würde.

Aufgabe der Erfindung ist es daher, ein Beschichtungsverfahren für Hohlfasern zu schaffen, welches wirtschaftlich in der Anwendung ist und trotzdem befriedigende Beschichtungsergebnisse liefert. Diese Aufgabe wird durch die Merkmale des Patentanspruches 1 gelöst.

### Vorteile der Erfindung

Das erfindungsgemäße Verfahren ist dadurch gekennzeichnet, dass im Inneren einer porösen Hohlfaser, welche z.B. aus einem keramischen oder metallischen Werkstoff besteht, ein Unterdruck aufgebaut wird, so dass der Druckunterschied zwischen dem im Bad vorliegenden Druck und dem Inneren der Hohlfaser erhöht wird. Die Hohlfaser weist eine Wand auf, welche einen Hohlraum umschließt Hierbei kann die Hohlfaser einen beliebigen Querschnitt aufweisen. Besondere Ausführungen können z.B. kreisförmig, rechteckig oder dreieckig sein, wobei der Hohlraum derart angeordnet ist, dass gleichmäßige Wandstärken entstehen. Durch den Druckunterschied wird die bereits genannte Kapillarwirkung der in der Hohlfaser vorhandenen Kanäle durch ein Druckgefälle unterstützt, so dass die gewünschten Schichtdicken, welche z. B. im Bereich von 0,2 bis 10 µm liegen können, wesentlich schneller und von gleich guter Qualität an der Oberfläche der Hohlfaser abgeschieden werden. Dabei lässt sich über den Unterdruck die Geschwindigkeit der Abscheidung des im Bad enthaltenen Beschichtungswerkstoffes ohne weiteres einstellen. Weiterhin sind die Eintauch- und Auftauchgeschwindigkeit an den Beschichtungswerkstoff und die Hohlfaser anzupassen. Das Verfahren ist daher in vorteilhafter Weise dazu geeignet, die Prozesssicherheit sowie die Dauer des Verfahrens in positiver Weise zu beeinflussen. Mögliche Beschichtungswerkstoffe für Sol-Gel-Beschichtungen können z. B. γ-Al₂O₃; α-Al₂O₃; ZrO₂; MgAl₂(OR)x; MgAl(OR)x; SiO₂; TiO₂ sein. Polymerschichten können z. B. aus Polyamid, Silikon, Cellulose, Polyaminosäuren oder Polyetherketon bestehen. Das Beschichtungsverfahren ist insbesondere für Hohlfasern geeignet, welche eine Wandstärke der Hohlfaser von weniger als 0,5 mm aufweisen. Hohlfasern mit größeren Wandstärken können selbstverständlich auch mit dem erfindungsgemäßen Verfahren beschichtet werden. Die Hohlfasern können an ihrer Außenwand und / oder ihrer Innenwand beschichtet werden. Weiterhin kann die Beschichtung auf der Anströmseite und / oder der Abströmseite der Hohlfaser aufgebracht sein. Bei einer anströmseitig aufgebrachten Beschichtung ist diese, bei einer Durchströmung von Innen nach Außen also auf der Innenseite angeordnet.

Gemäß einer vorteilhaften Ausgestaltung der Erfindung wird zum Aufbau des Unterdrucks im Inneren der Hohlfaser ein freies Ende mit einem Verschluss versehen und das gegenüber liegende Ende der Hohlfaser mit einer abgedichteten Aufnahme, welche einen Unterdruckanschluss aufweist Über den Unterdruckanschluss kann das im Inneren der Hohlfaser befindliche Fluid, welches vorzugsweise ein Gas wie z.B. Luft ist, abgesaugt werden, wobei durch den dichtenden Abschluss zwischen Aufnahme und Hohlfaser sowie durch den Verschluss am gegenüber liegenden Ende der Unterdruck im Inneren der Hohlfaser gehalten werden kann. Eine Erniedrigung des Innendrucks um ca. 100 - 500mbar ist für den Beschichtungsprozess ausreichend. Durch den geringen Unterdruck wird der zur Erzeugung des Unterdruckes benötigte Energiebedarf begrenzt, wodurch das Verfahren kostengünstig ist. Hierbei lässt sich mit dem geringst möglichen Aufwand an Komponenten das Verfahren verwirklichen. Denkbar wäre auch ein Abschluss beider Enden mit einem Unterdruckanschluss, wodurch jedoch mehr Bauteile benötigt würden.

Gemäß einer weiteren Ausgestaltung der Erfindung wird die Hohlfaser bei der Handhabung zwischen den genannten Enden durch mindestens ein Stützelement gestützt Insbesondere bei keramischen Hohlfasern, die durch einen Sinterprozess hergestellt wurden, handelt es sich um sehr empfindliche Halbzeuge, welche bei einer längeren Ausgestaltung zwischen den Enden zum Brechen neigen. Durch ein oder mehrere Stützelemente kann dieser Bruchneigung entgegen gewirkt werden, so dass bei dem Verfahren eine höhere Ausbeutung erzielt werden kann.

Eine weitere vorteilhafte Optimierung des Prozesses liegt in der Anordnung mehrerer Hohlfasern parallel zueinander in einer Ebene. Hierbei können auch bis zu ca. 1000 Hohtfasem parallel angeordnet werden. Diese können die Verfahrensschritte der Beschichtung gleichzeitig durchlaufen, so dass zwischen den einzelnen Verfahrensschritten Handhabungszeiten eingespart werden können, da diese für alle parallel angeordneten Hohlfasern nur einmal durchlaufen werden müssen.

Das Verfahren für mehrere Hohlfasern kann weiter optimiert werden, wenn die Hohlfasern vor der Handhabung im angesprochenen Verfahren auf einer geeigneten Unterlage, insbesondere einem Formkörper mit parallel ausgerichteten Rillen, parallel angeordnet gelagert werden. In diesen Formkörper, welcher z. B. aus Siliciumcarbid besteht, können die Fasern vor der Beschichtung getrocknet und gebrannt bzw. gesintert werden, so dass auch bei diesem Verfahrensschritt die Belastung der empfindlichen Bauteile möglichst gering gehalten wird. Nach dem Trocknungs- und Sinterprozess können die Hohtfasem beispielsweise mittels eines Rechens aus den Rillen ausgeschoben werden, wobei die einen Enden mit einer Verschlussleiste versehen werden, die gleichzeitig den Unter druckanschluss trägt. Die Hohlfaserenden werden dichtend in eine Verschlussleiste eingebracht, wodurch die Erzeugung eines Vakuums im Inneren der Membran möglich wird. Selbstverständlich können die bereits genannten Stützelemente ebenfalls länglich ausgestaltet werden, um den Verband von Hohlfasern beispielsweise in der Mitte zu stützen. Diese Ausbildung des Verfahrens ermöglicht eine einfache großtechnische Herstellung von beschichteten Hohlfasern, wobei diese vorteilhaft mit Hilfe eines Portals von Verfahrensschritt zu Verfahrensschritt transportiert werden. Dieses ist zu diesem Zwecke vertikal und horizontal beweglich ausgeführt, so dass durch einfache Bewegungsabläufe das Verfahren durchgeführt werden kann.

Gemäß einer weiteren Ausgestaltung der Erfindung kann die Hohlfaser vor dem Verfahrensschritt der eigentlichen Beschichtung einer Qualitätsprüfung unterzogen werden, welche insbesondere in der selben Apparatur wie die Beschichtung selbst erfolgt Die Qualitätsprüfung besteht in einer Beaufschlagung der Hohlfaser mit einem Überdruck bzw. Unterdruck, wobei die zu prüfenden Hohlfasern z.B. in ein Wasser- oder Ethanolbad eingetaucht sind. Dabei können Undichtheiten festgestellt werden, die z. B. durch eine unzureichende Abdichtung zum Verschluss bzw. zur Aufnahme hin erzeugt werden. Ebenso können Fehlstellen in der Struktur der Hohlfaser festgestellt werden, da diese Fehlstellen und deren Größe in Abhängigkeit von dem angelegten Druck durch an der Hohlfaser-Oberfläche austretende Gasblasen erkannt werden können. Hierzu können bereits im Stand der Technik bekannte Verfahren genutzt werden. Zuletzt kann durch den Überdruck auch die mechanische Stabilität der Hohlfaser geprüft werden. Sinkt diese unter einen definierten Wert, so wird die Membran bersten, wodurch die mindere Qualität zu Tage tritt. Selbstverständlich kann eine weitere Qualitätsprüfung auch nach der Beschichtung durchgeführt werden. Hierbei ist zu beachten, dass bedingt durch die sehr kleinen Poren bei einer derartigen Qualitätsprüfung extrem hohe Drücke erforderlich sind.

Eine weitere Ausgestaltung der Erfindung sieht vor, dass die Hohlfaser nach dem Verfahrensschritt der eigentlichen Beschichtung einer Wärmebehandlung unterzogen wird. Dies ist insbesondere vorteilhaft für Beschichtungswerkstoffe, die selbst mit dem Grundkörper der Hohlfaser durch Sinterung verbunden werden können. Weiterhin können durch die Wärmebehandlung Rückstände des Tauchbades restlos aus der Hohlfaser beseitigt werden.

Ein weiterer Vorteil der Wärmebehandlung ist die Möglichkeit, den Verschluss am freien Ende durch einen aufschmelzbaren Werkstoff zu erzeugen. Der Verschluss der Hohlfasern erfolgt demnach durch ein Eintauchen in den noch flüssigen Werkstoff des Verschlusses, der z. B. aus Schmelzkleber, Paraffin oder einem Kunststoff bestehen kann. Während des Beschichtungsverfahrens ist der Verschluss erstarrt und führt so zu einer optimalen Abdichtung des freien Endes der Hohlfasern. Durch die anschließende Wärmebehandlung wird der Werkstoff des Verschlusses wieder aufgeschmolzen und "weggebrannt", wodurch sich der Verschluss auf diese Weise von der Hohlfaser entfernen lässt.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: den schematischen Aufbau für das erfindungsgemäße Beschichtungsverfahren im Schnitt,
- Figur 2: die Aufnahme von Hohlfasern aus einem Formkörper perspektivisch,
- Figur 3: den Verschluss der Hohlfasern und die Stützung durch ein Stützelement perspektivisch,
- Figur 4: die Qualitätsprüfung der Hohlfasern perspektivisch,
- Figur 5: die Beschichtung der Hohlfasern perspektivisch und
- Figur 6: die anschließende Wärmebehandlung der Hohlfasern.

### Beschreibung der Ausführungsbeispiele

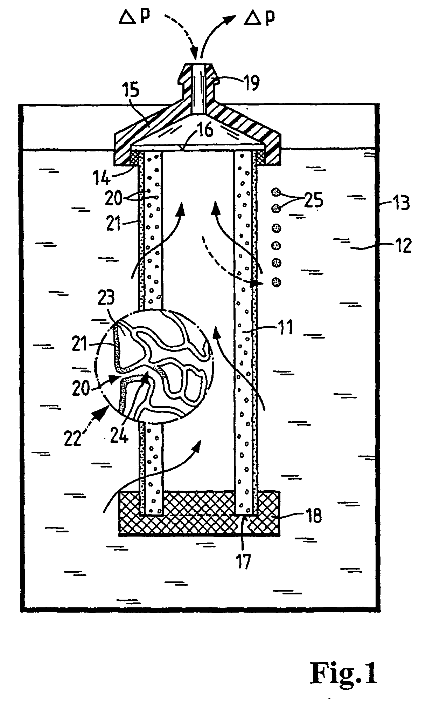

Das Verfahren ist in Figur 1 schematisch dargestellt. Eine Hohlfaser 11 ist in ein Beschichtungsbad 12, welches den Beschichtungswerkstoff enthält, getaucht. Das Beschichtungsbad 12 befindet sich in einem ersten Behälter 13.

Die Hohlfaser 11 ist mittels einer schematisch angedeuteten Dichtung 14 in eine Aufnahme 15 mit einem Ende 16 eingefasst. Ein freies Ende 17 ist mit einem Verschluss 18 versehen. Dadurch bildet die Hohlfaser zusammen mit dem Verschluss 18 und der Aufnahme 15 ein abgeschlossenes Volumen.

An einen Unterdruckanschluss 19 kann zur Beschichtung ein Unterdruck angelegt werden, wodurch das Bad durch Poren 20 in der Hohlfaser 11 entsprechend der angedeuteten durchgezogenen Pfeile in das Innere der Hohlfaser 11 gelangt Dabei bildet sich eine schematisch angedeutete Beschichtung 21. Die Beschichtung 21 findet nur auf der Oberfläche der Hohlfaser 11 statt. Ein Eindringen der Beschichtung 21 in die Poren 20 ist nicht erwünscht. Die Oberflächenstruktur ist in dem vergrößerten Ausschnitt 22 in Figur 1 dargestellt. Hier sind Körner 23 der Hohlfaser zu erkennen, welche durch den Sinterprozess zusammengebacken sind. Zwischen den Körnern bilden sich Kanäle 24, welche die poröse Struktur der Hohlfaser ausmachen.

Zu bemerken ist weiterhin, dass der Unterdruckanschluss 19 auch zum Anlegen eines Überdruckes genutzt werden kann (gestrichelter Fall). Hierdurch ist eine Qualitätsprüfung der Hohlfaser 11 möglich. Bei unzulässig großen Fehlstellen in der Hohlfaser bildet sich eine Blasenspur 25 im Beschichtungsbad 12.

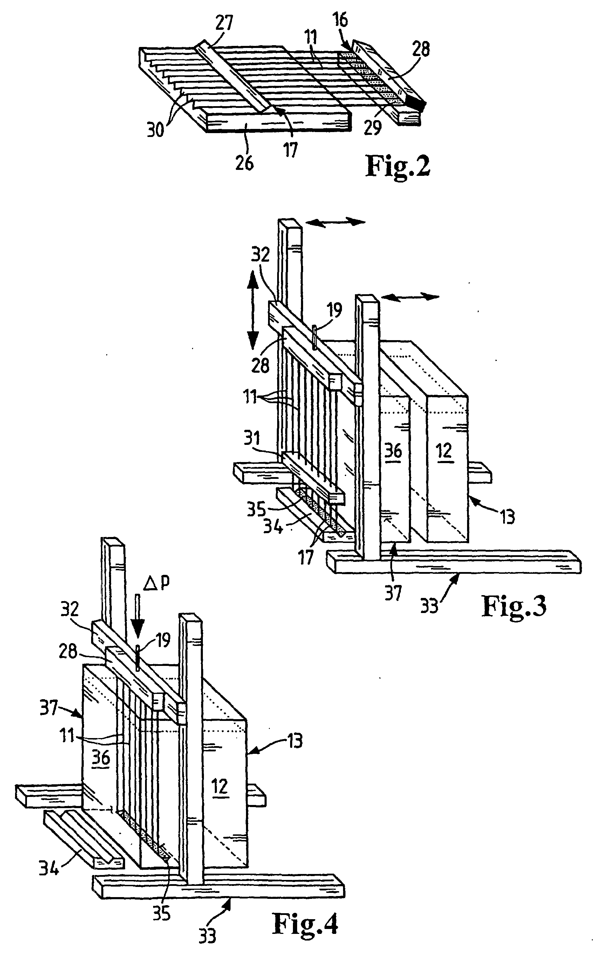

Die Figuren 2 bis 6 stellen nun schematisch, perspektivisch ein Fertigungsverfahren mehrerer Hohlfasern gleichzeitig dar, wie dieses großtechnisch umgesetzt werden könnte.

Gemäß Figur 2 werden die Hohlfasern 11 von einem Formkörper 26 mittels eines Abstreifers 27 herunter geschoben und in einer Aufnahmeleiste 28 mittels einer Formdichtung 29 gelagert. Der Abstreifer kann manuell oder automatisch betätigt werden. Der Formkörper 26 weist Rillen 30 auf, in denen die Hohlfasern 11 beispielsweise mit Hilfe einer Ringdüse in einem Fällbad ersponnen und anschließend getrocknet und gesintert werden können.

Um die parallel angeordneten Hohlfasern 11 besser handhaben zu können, wird anschließend ein Stützelement 31, welches in Form einer Leiste ausgeführt ist, an den Hohlfäsem angebracht (Figur 3). Mit Hilfe des Stützelementes lassen sich die Hohlfasern von der horizontalen in eine vertikale Lage bewegen und an einem Portal 32 befestigen. Das Portal 32 ist mit Hilfe eines Gestänges 33 horizontal und vertikal entsprechend der angedeuteten Doppelpfeile gemäß Figur 3 beweglich.

Mit Hilfe einer Gussform 34 werden die freien Enden 17 der Hohlfasern in einer thermoplastischen Verschlussleiste oder auch einer herkömmlichen Pressdichtung eingegossen bzw. eingesteckt. Nach Erhärten der thermoplastischen Verschlussmasse kann das Stützelement 31 entfernt werden, so dass bei der anschließenden Weiterbehandlung der Hohtfasem die gesamte Oberfläche derselben dem Beschichtungsbad 12 im ersten Behälter 13 ausgesetzt werden kann. Vor der Beschichtung wird gemäß Figur 4 der Verband von Hohlfasern jedoch erst einer Qualitätsprüfung in einem Prüfbad 36 unterzogen, welches in einem zweiten Behälter 37 untergebracht ist. Der Unterdruckanschluss 19 wird während der Qualitätsprüfung zur Beaufschlagung der Hohlfasern 11 mit einem Überdruck verwendet. Die Funktion der Qualitätsprüfung ist im Zusammenhang mit Figur 1 bereits beschrieben worden.

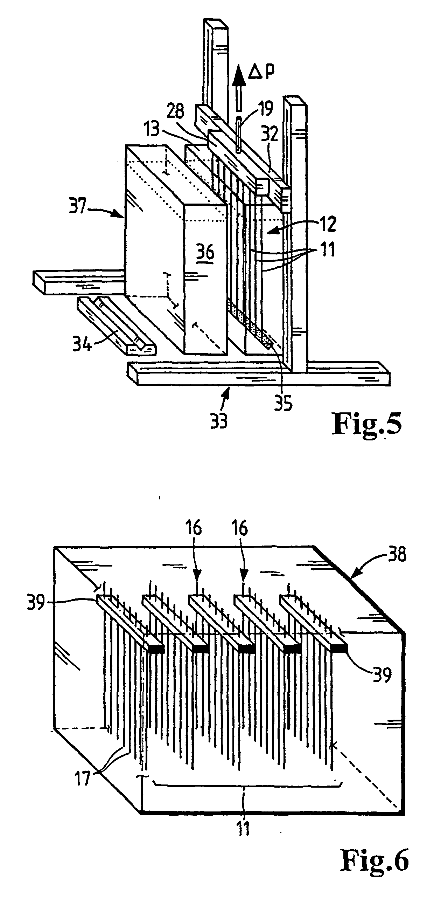

Anschließend wird gemäß Figur 5 der Verband von Hohlfasern 11 in das Beschichtungsbad 12 eingetaucht, wobei mittels eines einmaligen Tauchvorgangs Schichten von 0,5 bis 10 µm, insbesondere 1 µm Dicke hergestellt werden können. Hierbei muss eine sehr gleichmäßige Auftauchgeschwindigkeit der Hohlfasern von z. B. 3 bis 5 cm pro Sekunde eingehalten werden. Nach dem vollständigen Auftauchen der Hohlfasermembranen bildet sich als Beschichtung beispielsweise eine sogenannte Solschicht, welche einer weiteren Verarbeitung zugeführt wird. Weitere Beschichtungsverfahren wie z.B. Verdampfen von Lösungsmitteln, Aushärtung der Beschichtung durch UV-Bestrahlung können selbstverständlich ebenfalls zur Beschichtung der Hohlfasern genutzt werden. Hierbei kann die Beschichtung auch aus nichtkeramischen Materialien wie z.B. Polymeren oder Metalle gebildet werden.

Der beschriebene Prozess kann mittels des Gestänges durch eine Linearführung voll automatisch erfolgen. Der Vergleich der Figuren 3 bis 5 macht deutlich, dass das Portal mit Hilfe des Gestänges von der Gussform 34 in den zweiten Behälter 37 und anschließend in den ersten Behälter 12 eingetaucht wird. Die Ansteuerung des Gestänges macht weiterhin die geforderten Bewegungsgeschwindigkeiten möglich und erlaubt ein sehr genaues Einstellen der Beschichtungsparameter. Hierbei ist ein pulsationsarmer Antrieb erforderlich, um die sehr empfindlichen Hohlfasern nicht zu beschädigen.

Zuletzt ist in Figur 6 die Nachbehandlung der Hohlfasern 11 in einem Ofen 38 dargestellt. Zu diesem Zweck werden die Hohlfasern aus der Aufnahmeleiste 28 entfernt und in eine temperaturbeständige Halterung 39 gebracht. Dabei können sie in einem ähnlichen Verfahren wie in Figur 2 beschrieben zwischenzeitlich durch einen Stützkörper 31, welcher insbesondere temperaturbeständig ausgeführt ist, oder einen Formkörper 26 unterstützt werden, so dass die Handhabung ohne ein Brechen von Hohlfasern möglich ist. Durch die temperaturbeständige Ausführung des Stützkörpers, kann dieser die Hohlfaser auch bei einer nachfolgenden Wärmebehandlung stützen und ein Umsetzen der Hohlfaser kann entfallen.

Im Ofen kann beispielsweise eine Temperung der Solschicht bei 400 bis 800 °C und einer Dauer von 1 bis 4 Stunden durchgeführt werden. Beschichtungen, wie z.B. Polymerschichten, welche nicht getempert werden müssen, können direkt nach dem Verdampfen der Lösung bzw. nach dem Trocknen zur Filtration eingesetzt werden. Auf diese Weise lassen sich Ultra- Mikro- und Nanofiltrationsschichten herstellen, deren resultierender Porendurchmesser zwischen 10 und 20 Nanometer liegen kann.

Die Wärmebehandlung kann gleichzeitig genutzt werden, um die Verschlussleiste 35 von den freien Enden 17 der Hohtfasem zu trennen (nicht dargestellt). Diese lässt sich rückstandslos abschmelzen und ist in dem Ausführungsbeispiel aus Paraffin hergestellt.

## Patentansprüche

1. Verfahren zur Erzeugung einer Beschichtung (21) auf der Außenseite einer porösen Hohlfaser (11), wobei die Hohlfaser zu diesem Zweck in ein den Beschichtungswerkstoff enthaltendes Bad eingetaucht wird, **dadurch gekennzeichnet, dass** im Inneren der Hohlfaser ein Unterdruck im Verhältnis zum im Bad vorliegenden Druck aufgebaut wird.

2. Verfahren nach Anspruch 1, **dadurch gekennzeichnet, dass** die Wandstärke der Hohlfaser weniger als 0,5 mm beträgt

3. Verfahren nach einem der vorherigen Ansprüche, **dadurch gekennzeichnet, dass** zum Aufbau des Unterdruckes im Inneren der Hohlfaser (11) ein freies Ende (17) derselben mit einem Verschluss versehen wird und das andere Ende (16) der Hohlfaser dichtend in eine Aufnahme (15), welche einen Unterdruckanschluss (19) aufweist, eingelegt wird.

4. Verfahren nach einem der vorherigen Ansprüche, **dadurch gekennzeichnet, dass** die Hohlfaser (11) bei der Handhabung zwischen den Enden (16, 17) durch mindestens ein Stützelement (31) gestützt wird.

5. Verfahren nach einem der vorherigen Ansprüche, **dadurch gekennzeichnet, dass** mehrere Hohlfasern parallel in einer Ebene angeordnet werden, wobei diese alle Verfahrensschritte der Beschichtung gleichzeitig durchlaufen.

6. Verfahren nach dem auf den Anspruch 3 zurückbezogenen Anspruch 5, **dadurch gekennzeichnet, dass** die Hohlfasern (11) einer Unterlage (26) entnommen werden, wobei die Hohlfasern (11) parallel auf der Unterlage angeordnet sind, wobei der Verband von Hohlfasern mit den freien Enden (17) in eine Verschlussleiste (35) und mit den anderen Enden (16) in eine Aufnahmeleiste (28), weiche den Unterdruckanschluss (19) aufweist, eingebracht werden.

7. Verfahren nach Anspruch 6, **dadurch gekennzeichnet, dass** der Verband von Hohlfasern (11) mit Hilfe eines vertikal und horizontal beweglichen Portals (32) hängend den Verfahrensschritten unterworfen wird.

8. Verfahren nach einem der vorherigen Ansprüche, **dadurch gekennzeichnet, dass** die Hohlfaser (11) vor dem Verfahrensschritt der eigentlichen Beschichtung einer Qualitätsprüfung unterzogen wird, indem die Hohlfaser (11) mit einem Überdruck beaufschlagt wird.

9. Verfahren nach einem der vorherigen Ansprüche, **dadurch gekennzeichnet, dass** die Hohlfaser (11) nach dem Verfahrensschritt der eigentlichen Beschichtung einer Wärmebehandlung unterzogen wird.

10. Verfahren nach dem auf Anspruch 3 rückbezogenen Anspruch 9, **dadurch gekennzeichnet, dass** mittels der Wärmebehandlung der Verschluss am freien Ende (17) der Hohlfaser (11) durch Aufschmelzen entfernt wird.

## Claims

1. Method for the generation of a coating (21) on the outside of a porous hollow fibre (11), wherein for this purpose the hollow fibre is dipped into a bath containing the coating substance, **characterised in that** a negative pressure is created in the interior of the hollow fibre in relation to the pressure present in the bath.

2. Method according to claim 1, **characterised in that** the thickness of the wall of the hollow fibre is less than 0.5 mm.

3. Method according to one of the preceding claims, **characterised in that** to create the negative pressure in the interior of the hollow fibre (11), a free end (17) of the same is provided with a closure and the other end (16) of the hollow fibre is inserted in a sealing manner into a receiving means (15), which includes a vacuum connection (19).

4. Method according to one of the preceding claims, **characterised in that**, whilst being manipulated, the hollow fibre (11) is supported between the ends (16, 17) by at least one supporting member (31).

5. Method according to one of the preceding claims, **characterised in that** a plurality of hollow fibres are disposed in parallel in one plane, wherein they run through all the method steps of the coating at the same time.

6. Method according to claim 5 with reference to claim 3, **characterised in that** the hollow fibres (11) are removed from a base (26), wherein the hollow fibres (11) are disposed in parallel on the base, wherein the free ends (17) of all the hollow fibres are inserted into a closure strip (35) and the other ends (16) are inserted into a receiving strip (28), which includes the vacuum connection (19).

7. Method according to claim 6, **characterised in that** all the hollow fibres (11) are subjected to the method steps in a suspended manner with the aid of a portal (32) which is displaceable in a vertical and a horizontal manner.

8. Method according to one of the preceding claims, **characterised in that**, before the method step of the actual coating, the hollow fibres (11) are subjected to a quality test by the hollow fibres (11) being impinged upon with excessive pressure.

9. Method according to one of the preceding claims, **characterised in that**, after the method step of the actual coating, the hollow fibres (11) are subjected to heat treatment.

10. Method according to claim 9 with reference to claim 3, **characterised in that**, by means of the heat treatment, the closure at the free end (17) of the hollow fibre (11) is removed by melting.

## Revendications

1. Procédé de fabrication d'un revêtement (21) sur le côté externe d'une fibre creuse (11) poreuse, la fibre creuse étant immergée à cet effet dans un bain contenant le matériau de revêtement,
**caractérisé en ce qu'**
une dépression par rapport à la pression présente dans le bain est générée à l'intérieur de la fibre creuse.

2. Procédé selon la revendication 1,
**caractérisé en ce que**
l'épaisseur de paroi de la fibre creuse est inférieure à 0,5 mm.

3. Procédé selon l'une quelconque des revendications précédentes,
**caractérisé en ce qu'**
une extrémité libre (17) de la fibre creuse (11) est pourvue d'une fermeture en vue de la génération de la dépression à l'intérieur de celle-ci et l'autre extrémité (16) de la fibre creuse est introduite dans un logement (15) qui présente un raccord de dépression (19).

4. Procédé selon l'une quelconque des revendications précédentes,
**caractérisé en ce que**
la fibre creuse (11) est supportée par au moins un élément d'appui (31) lors de la manipulation entre les extrémités (16, 17).

5. Procédé selon l'une quelconque des revendications précédentes,
**caractérisé en ce que**
plusieurs fibres creuses sont disposées parallèlement dans un plan, celles-ci parcourant simultanément toutes les étapes de procédé du revêtement.

6. Procédé selon la revendication 5 se rapportant à la revendication 3,
**caractérisé en ce que**
les fibres creuses (11) sont prélevées d'une base (26), les fibres creuses (11) étant disposées parallèlement sur la base, l'assemblage de fibres creuses étant introduit avec les extrémités libres (17) dans une baguette de fermeture (35) et avec les autres extrémités (16) dans une baguette de réception (28) qui présente le raccord de dépression (19).

7. Procédé selon la revendication 6,
**caractérisé en ce que**
l'assemblage de fibres creuses (11) est soumis aux étapes de procédé en suspension à l'aide d'un portail (32) mobile verticalement et horizontalement.

8. Procédé selon l'une quelconque des revendications précédentes,
**caractérisé en ce que**
la fibre creuse (11) est soumise à un contrôle qualité avant l'étape de procédé du revêtement proprement dit **en ce que** la fibre creuse (11) est sollicitée par une surpression.

9. Procédé selon l'une quelconque des revendications précédentes,
**caractérisé en ce que**
la fibre creuse (11) est soumise à un traitement thermique après l'étape de procédé du revêtement proprement dit.

10. Procédé selon la revendication 9 se rapportant à la revendication 3,
**caractérisé en ce que**
la fermeture à l'extrémité libre (17) de la fibre creuse (11) est retirée au moyen du traitement thermique par fusion.
